# FASCICULE DE BREVET EUROPEEN

(11) **EP 1 250 286 B1**
(45) Date de publication et mention de la délivrance du brevet: **08.03.2006**
(21) Numéro de dépôt: 00993602.2
(22) Date de dépôt: 22.12.2000
(51) Int. Cl.: C01B 21/16, B01D 61/36

(54) **PROCEDE DE CONCENTRATION DE SOLUTION D'HYDRAZINE AQUEUSE ET UTILISATION D'UN DISPOSITIF POUR SA MISE EN OEUVRE**
VERFAHREN ZUR VERDICHTUNG WÄSSERIGER HYDRZIN LÖSUNGEN UND VERWENDUNG EINER VORRICHTUNG DAFÜR
METHOD FOR CONCENTRATING AQUEOUS HYDRAZINE SOLUTION AND USE OF A DEVICE THEREFOR

(30) Priorité: 24.12.1999 FR 9916555
(43) Date de publication de la demande: 23.10.2002
(73) Titulaire: Arkema, 92800 Puteaux (FR)
(72) Inventeur: RICARD, Jean-Philippe, F-92300 Levallois-Perret (FR); GANCET, Christian, F-64140 Lons (FR)
(74) Mandataire: Hirsch & Associés
(86) Numéro de dépôt international: PCT/FR2000/003674
(87) Numéro de publication internationale: WO 2001/047805

(56) Documents cités:
- EP-A- 0 610 775
- WO-A-97/44121
- FR-A- 2 096 358
- US-A- 4 728 429
- US-A- 4 788 043
- US-A- 4 952 318
- US-A- 5 066 403
- US-A- 5 238 573
- R. RAVINDRA: "Separation Studies of Hydrazine from Aqueous Solutions by Pervaporation" JOURNAL OF POLYMER SCIENCE: PART B: POLYMER PHYSICS, vol. 37, no. 16, 15 août 1999 (1999-08-15), pages 1969-1980, XP002146926 New-York, US
- I. CABASSO: "The permselectivity of ion-exchange membtranes for non-electrolyte liquid mixtures I. Separation of alcohol/water mixtures with Nafion hollow fibers" JOURNAL OF MEMBRANE SCIENCE, vol. 24, no. 1, juin 1985 (1985-06), pages 101-119, XP002168450 Amsterdam, NL
- JIANG J -S ET AL: "Pervaporation of methanol from a triglyme solution using a Nafion membrane: 1. Transport studies" JOURNAL OF MEMBRANE SCIENCE,NL,ELSEVIER SCIENTIFIC PUBL.COMPANY. AMSTERDAM, vol. 132, no. 2, 3 septembre 1997 (1997-09-03), pages 255-262, XP004087039 ISSN: 0376-7388
- JIANG J -S ET AL: "Preparation of a Nafion composite membrane using a porous teflon support" JOURNAL OF MEMBRANE SCIENCE,NL,ELSEVIER SCIENTIFIC PUBL.COMPANY. AMSTERDAM, vol. 132, no. 2, 3 septembre 1997 (1997-09-03), pages 273-276, XP004087041 ISSN: 0376-7388
- 1990, ULLMANN'S ENCYCLOPEDIA OF INDUSTRIAL CHEMISTRY, EDITION 5, VOL. A16 * page 228, colonne 2, dernier alinéa - page 229, colonne 1, alinéa 1 *

## Description

L'invention a pour objet un procédé de concentration de solution d'hydrazine aqueuse qui permet la production d'hydrazine anhydre, ainsi que l'utilisation d'un dispositif pour sa mise en oeuvre.

L'hydrazine et l'eau forment un azéotrope; sous pression (partielle) de la solution égale à une atmosphère, la teneur en hydrazine de la solution azéotropique est d'environ 69 % (en poids).

Traditionnellement, un tiers corps est utilisé lors de la distillation azéotropique; l'aniline est très largement utilisée en tant qu'agent d'entraînement. Cependant, l'utilisation d'un tiers corps pose de nombreux problèmes; il est donc souhaitable de ne pas utiliser ce tiers corps.

Dans la mesure où l'hydrazine et l'eau forment un azéotrope, la distillation classique ne permet pas d'obtenir de l'hydrazine sensiblement pure, sauf lorsque la teneur en hydrazine de la solution d'alimentation à distiller est supérieure à 70 % en poids. En effet, le document "Hydrazine and its derivatives; preparation, properties, applications" par E. Schmidt, Ed. John Wiley & Sons, 1984, enseigne que si l'alimentation de la colonne est une solution contenant plus de 70 % en poids d'hydrazine, alors l'hydrazine pure sortira en tête de la colonne tandis que l'azéotrope (à température maximale) sortira en pied. Ce même document n'enseigne, pour atteindre de telles valeurs supérieures ou égale à 70 %, que la distillation en présence d'un tiers corps (notamment aniline). Ce même document toujours enseigne que l'azéotrope hydrazine-eau n'est sensiblement pas influencé par les variations de pression, les variations de concentrations étant de 3 % en poids maximum sur un intervalle de pression de 16 à 95 kPa.

On connaît aussi les procédés de pervaporation, qui permettent de déshydrater des mélanges binaires tels que ceux à base d'alcools (par exemple isopropanol), de cétones (par exemple méthyléthylcétone), d'amines (par exemple éthylamine), etc. La pervaporation sur membranes hydrophiles ou hydrophobes utilise des différences d'hydrophilie ou de caractère polaire entre eau et alcool, eau et cétone, eau et amine. Lorsque ce procédé de pervaporation sur membranes hydrophiles ou hydrophobes est appliqué au binaire hydrazine-eau, il est sensiblement inopérant.

Le document FR 2 096 358 A décrit un procédé de concentration de solutions aqueuses contenant un composé organique ou minéral, comprenant une étape de pervaporation sur une membrane cationique. L'hydrazine est mentionnée parmi une liste de composés organiques que l'on doit généralement concentrer par enlèvement préférentiel de l'eau de systèmes azéotropiques ou non-azéotropiques. Aucun exemple ne traite de la concentratin d'une solution d'hydrazine. Dans un exemple, une membrane cationique à base d'un copolymère complétement fluoré contenant des groupes d'acide sulfonique est utilisée pour concentrer une solution aqueuse du HNO₃.

Les documents US 4 788 043 A et WO 97 44121 A décrivent des dispositifs de pervaporation comprenant une membrane cationique à base d'un polymère perfluoré contenant des groupes acide sulfonique latéraux, ces dispositifs étant reliés à une colonne de distillation. Ces documents ne concernent pas la concentration de solutions hydrazine.

L'invention propose un procédé de concentration de solution d'hydrazine aqueuse par pervaporation, qui utilise un type de membranes habituellement destinées à l'électrodialyse.

Ainsi, l'invention fournit un procédé de concentration d'une solution d'hydrazine aqueuse de départ en une solution concentrée, comprenant l'étape de pervaporation sur une membrane cationique à base d'un polymère perfluoré contenant des groupes acide sulfonique latéraux (-SO₃H) ou en mélange avec du polytétrafluoréthylène (PTFE).

Selon un mode de réalisation,

Selon un autre mode de réalisation, la différence de concentration entre les solutions d'hydrazine aqueuse de départ et concentrée est d'au moins 2 %, avantageusement au moins 4 %.

Selon un autre mode de réalisation, la solution concentrée a une concentration en hydrazine supérieure à celle de l'azéotrope considéré sous la pression à laquelle se trouve ladite solution concentrée.

Selon un autre mode de réalisation, la solution d'hydrazine aqueuse de départ est binaire.

L'invention fournit aussi un procédé de production d'hydrazine anhydre, comprenant une première étape de concentration d'une solution d'hydrazine aqueuse de départ en une solution concentrée selon l'invention, et la distillation de cette solution concentrée la pression de distillation étant choisie de telle sorte que la concentration de ladite solution concentrée est supérieure à la valeur de celle de l'azéotrope considéré à la pression de distillation.

Selon un mode de réalisation, la solution concentrée a une concentration en hydrazine supérieure à celle de l'azéotrope considéré sous la pression à laquelle se trouve ladite solution concentrée.

Avantageusement, la pression de distillation est de 1 bar.

L'invention fournit aussi l'utilisation d'un dispositif de pervaporation (1) comprenant une membrane cationique, telle que revendiquée dans la revendication 10.

L'invention fournit l'utilisation d'un dispositif de production d'hydrazine anhydre, telle que revendiquée dans la revendication 12, comprenant le dispositif de pervaporation (1) précédent, relié à une colonne de distillation (6). Cette colonne est mise en oeuvre de préférence sous pression de 1 bar.

Selon un mode de réalisation, la conduite (8) de soutirage en pied de la colonne est recyclée vers l'alimentation (2) du dispositif de pervaporation (1).

Les dispositifs sont adaptés pour la mise en oeuvre des procédés selon l'invention.

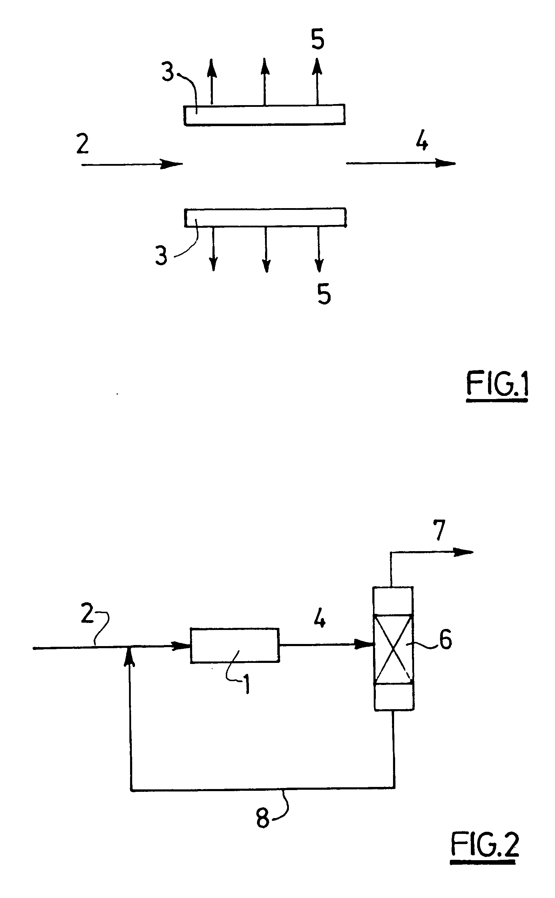

L'invention est maintenant décrite plus en détails en référence à la figure 1 qui représente un dispositif pour la mise en oeuvre de l'invention et selon l'art antérieur, et en référence à la figure 2. Le dispositif représenté à la figure 2 ne corrrespond pas à l'inventon.

En référence à la figure 1, une solution d'hydrazine aqueuse est traitée dans un dispositif de pervaporation (1). Ce dispositif comprend une alimentation (2) d'un flux de solution d'hydrazine aqueuse, une membrane (3) de pervaporation et un flux de rétentat (4) et un flux de perméat (5). Le dispositif de pervaporation est mis en oeuvre de façon classique, par mise sous dépression au travers de membranes, de sorte que le côté perméat de la membrane est maintenu sous pression réduite par pompage continu ou par un courant d'un gaz.

L'invention est basée sur le fait surprenant qu'il est possible d'obtenir une sélectivité eau-hydrazine en effectuant la pervaporation sur des membranes ioniques (échangeuses d'ions) normalement réservées à l'électrodialyse. On utilise une membrane cationique (échangeuse de cations), et le perméat obtenu est enrichi en hydrazine en hydrazine. Ces membranes ioniques provoquent un véritable effet de concentration d'au moins 2 %, avantageusement d'au moins 4 %. Ainsi, en partant d'une concentration initiale proche de l'azéotrope, il est possible de franchir ce dernier sans difficulté particulière.

Les membranes ioniques selon l'invention sont des membranes classiquement utilisées en électrodialyse, à savoir des membranes cationiques à base d'un polymère perfluoré contenant des groupes acide sulfonique latéraux (-SO₃H ou des membranes cationiques en mélange avec du polytétrafluoréthylène (PTFE). On utilise en particulier, une membrane cationique qui est une résine acide sulfonique perfluorée vendue par E.I. du Pont de Nemours and Company sous la dénomination Nafion®. Cette résine est un copolymère de tétrafluoroéthylène et d'un monomère représenté par la stucture suivante :

CF₂=C(F)[-O-CF₂-C(CF₃)(F)]ₙ-O-CF₂-CF₂-SO₂F

Un tel copolymère est préparé sous la forme fluorure de sulfonyle et est ensuite hydrolysé en la forme acide (PFIEP-SO₃H) comme décrit dans le brevet américain n° 3 692 569. Des mélanges de « Nafion® » PFIEP-SO₃H avec le polytétrafluoroéthylène (PTFE) sont également utilisables dans la mise en oeuvre de la présente invention.

S'est avérée particulièrement avantageuse la membrane dénommée Nafion® 450, en raison de sa supériorité en matière de sélectivité. Cette membrane est une membrane cationique perfluorosulfonique renforcée par du PTFE. Elle a un poids équivalent de 1100 pour 1 équivalent de site sulfonique.

La pervaporation est mise en oeuvre de façon classique, à une température comprise, par exemple, entre 50 et 75°C, de préférence entre 60 et 70°C. La température est classiquement régulée grâce à des échangeurs (le perméat étant condensé, le liquide de l'autre côté de la membrane a tendance à se refroidir).

La solution obtenue grâce à ce nouveau procédé de pervaporation présente une concentration en hydrazine supérieure à l'azéotrope. Ceci permet ensuite, par une simple distillation, d'obtenir en tête de l'hydrazine anhydre et, en pied, l'azéotrope correspondant.

Cet azéotrope peut avantageusement être recyclé vers l'unité de pervaporation.

La figure 2 représente ce dernier dispositif, dans le cas de la pervaporation sur membranes anioniques (rétentat concentré). Le dispositif représenté à la figure 2 ne correspond pas à l'invention.

Le rétentat quitte l'unité de pervaporation par la conduite (4) et alimente une colonne de distillation (6) classique. Cette colonne fonctionne classiquement à une pression de 1 bar, avec une température de condensat en tête d'environ 113,5°C et une température de bouilleur en pied d'environ 120,5°C.

L'hydrazine anhydre (moins de 1 % en poids d'eau, avantageusement moins de 0,1 % en poids, préférentiellement moins de 0,01 % en poids) est soutirée par la conduite (7).

L'azéotrope est soutiré par la conduite (8) et est éventuellement recyclé vers l'unité de pervaporation. Il est aussi possible que la colonne de distillation fonctionne sous une pression réduite (la pression considérée étant la pression partielle de la solution).

Plus précisément, en référence à la figure 2, la conduite (4) amène une solution d'hydrazine aqueuse, sous 1 bar, contenant par exemple plus de 70 % en poids d'hydrazine. Cette concentration est supérieure à la concentration de l'azéotrope. Cette solution pénètre dans la colonne à distiller (6). Cette colonne à distiller est classique. Elle est mise en oeuvre sous une pression, par exemple atmosphérique, ou plus faible (par exemple 370 mbar). Il est clair que cette pression de la colonne (i.e. la pression de la distillation selon l'invention) est la pression partielle de la solution à distiller. On pourrait tout à fait concevoir qu'un gaz inerte soit injecté dans la colonne, de sorte que la colonne fonctionne sous pression atmosphérique, mais sous une pression partielle de solution d'hydrazine de, par exemple, 370 mbar. Des moyens permettant d'atteindre ces valeurs de pression partielle, lorsque ceux -ci sont requis, sont classiques (ces moyens sont non représentés). Ils peuvent comprendre par exemple des pompes ou une alimentation en gaz inerte. La colonne fonctionnera de préférence à 1 bar. La température du condenseur en tête de la colonne est de préférence fixée à la température d'ébullition de l'hydrazine pure sous la pression considérée, à savoir ici 113,5°C (pour 1 bar). La température du bouilleur en pied de la colonne est de préférence fixée à la température d'ébullition de l'azéotrope recueilli en pied (toujours sous la pression considérée), à savoir ici 120,3°C (pour 1 bar). L'azéotrope recueilli en pied contiendra alors environ 69,4 % en poids d'hydrazine. On peut cependant faire varier la composition de l'azéotrope en faisant varier la température en pied. Ainsi, toujours sous une pression de 1 bar, la température en pied peut être comprise entre 118 et 120,5°C.

Il est clair que les teneurs des divers flux peuvent être variées. On prendra soin cependant que la concentration de la solution d'alimentation de la colonne soit supérieure à la concentration de l'azéotrope qui serait obtenu sous la pression de fonctionnement de la colonne. Ainsi, en partant d'un flux ayant une teneur en hydrazine supérieure à celle de l'azéotrope considéré sous pression de 1 bar (telle qu'elle peut être obtenue par pervaporation), on peut obtenir par simple distillation un flux d'hydrazine anhydre en tête de la colonne, qui fonctionnerait alors classiquement sous une pression de 1 bar.

Mais il est aussi possible que la solution concentrée issue du procédé de pervaporation soit toujours inférieure à la valeur de l'azéotrope à 1 bar. Dans ce cas, en partant d'un flux ayant une concentration inférieure à celle de l'azéotrope, on peut toujours obtenir par simple distillation un flux d'hydrazine anhydre en tête de la colonne, qui fonctionne sous une pression inférieure à la pression atmosphérique. On peut aussi mettre en oeuvre la distillation avec un gaz diluant, de sorte que la pression partielle soit inférieure à la pression atmosphérique de la composition d'alimentation.

Il est aussi possible que, d'une part la concentration de la solution d'alimentation de la colonne soit supérieure à la concentration de l'azéotrope considéré sous une pression de 1 bar, et que d'autre part la colonne fonctionne sous une pression (partielle) inférieure à la pression atmosphérique.

On peut aussi prévoir de combiner les flux du présent dispositif avec d'autres flux, le cas échéant.

La solution d'hydrazine aqueuse de départ comprend bien entendu de l'hydrazine et de l'eau, mais peut aussi comprendre d'autres composants, en des proportions variables (selon la source de la solution d'hydrazine aqueuse de départ). De préférence cependant, cette solution d'hydrazine aqueuse est binaire.

L'invention permet donc l'obtention d'hydrazine anhydre sans utiliser de tiers corps, en particulier à partir d'un binaire hydrazine-eau.

Les exemples suivants illustrent l'invention sans la limiter.

Dans ces exemples, on utilise le dispositif décrit plus haut. Dans ce dispositif, la dépression côté perméat est obtenue par pompage sous 5 mbar. La phase vapeur du perméat est condensée dans un condenseur. Le rétentat est recirculé vers l'entrée afin de concentrer la solution (en eau ou en hydrazine, selon le cas). La pervaporation est mise en oeuvre à une température d'environ 60°C. La surface des membranes installées est de 126,3 cm² .

### EXEMPLE 1

Dans le premier exemple comparatif, le dispositif comprend des membranes hydrophiles Pervap 2306 (Sulzer Chemtech). 200 g d'une solution d'hydrazine aqueuse à 62,8 % en poids sont traités pendant 2,45 h. On obtient 35 g d'un perméat contenant 63,3 % en poids d'hydrazine, tandis que le rétentat présente une teneur en hydrazine de 62,7 % en poids. A l'évidence, il n'y a aucun effet de concentration avec ces membranes hydrophiles, la différence de concentration étant inférieure à 1 %. De plus, la productivité en hydrazine pure (i.e. la productivité de la potentialité de concentration) est de :
35 g x 0,5 % = 0,175 g, soit exprimé en g/m² = 13,9 g/m², à savoir d'environ 5 g/h.m². Cette productivité est dérisoire.

### EXEMPLE 2

Dans le second exemple comparatif, le dispositif comprend des membranes hydrophobes Pervap 1060 (Sulzer Chemtech). 200 g d'une solution d'hydrazine aqueuse à 62,1 % en poids sont traités pendant 2 h. On obtient 45 g d'un perméat contenant 60,9 % en poids d'hydrazine, tandis que le rétentat présente une teneur en hydrazine de 62,4 % en poids. A l'évidence, il n'y a ici non plus aucun effet de concentration avec ces membranes hydrophobes, la différence de concentration étant à nouveau inférieure à 1 %. La productivité en hydrazine pure est de :
155 g x 0,3 % = 0,465 g, soit exprimé en g/m² = 36,8 g/m², à savoir 18,4 g/h.m², elle est donc très faible.

### EXEMPLE 3

Dans cet exemple selon l'invention, le dispositif comprend des membranes échangeuses d'ions cationiques Nafion® 450 (DuPont de Nemours). 136,7 g d'une solution d'hydrazine aqueuse à 67,4 % en poids sont traités pendant 2 h. On obtient 23,5 g d'un perméat contenant 73,7 % en poids d'hydrazine (donc une concentration supérieure à celle de l'azéotrope). Il est clair qu'il y a un effet de concentration notable, la différence de concentration étant supérieure à 5 %. La productivité en hydrazine pure est de :
23,5 g x 6,3 % = 1,48 g, soit exprimé en g/m² = 117,2 g/m², à savoir 58,6 g/h.m². Cette productivité est élevée.
La sélectivité, définie comme étant la concentration moyenne du pervaporat obtenu au cours du test divisé par la concentration moyenne de la boucle entre le début et la fin du test ([N₂H₄] pervaporat/ [N₂H₄] rétentat) est de 1,093 et la productivité en hydrazine concentrée est de 0, 93 kg/h.m².

### EXEMPLE 4 (ne correspond pas à l'invention)

Le dispositif comprend des membranes échangeuses d'ions anioniques AMV (Asahi Glass). 185 g d'une solution d'hydrazine aqueuse à 65,9 % en poids sont traités pendant 6,75 h. On obtient 153,5 g d'un perméat contenant 70,2 % en poids d'hydrazine (donc ici aussi une concentration supérieure à celle de l'azéotrope). Il est clair qu'il y a un effet de concentration notable, la différence de concentration étant d'environ 5 %. La productivité en hydrazine pure est de :
153 5 x 4,3 % = 6,6 g, soit exprimé en g/m² = 522,6 g/m², à savoir 77,4 g/h.m².
Cette productivité est là aussi élevée.

### EXEMPLE 5

189 g de la solution concentrée à 73,7 % en poids d'hydrazine obtenue après concentration suivant l'exemple 3 sont distillés dans une colonne à distiller comportant 15 plateaux théoriques. La colonne est alimentée en permanence par un débit d'azote qui garantit la sécurité, de sorte que la pression partielle d'hydrazine en tête de la colonne est en réalité de 30 664 Pa (230 mm Hg). La distillation avec un taux de reflux de 1,5 a permis d'obtenir en tête 15 g d'hydrazine à 99,7 % en poids. La composition en pied était de 71,5 % en poids d'hydrazine. La température de tête était de 75°C environ et celle en pied était de 112,5°C environ.

### EXEMPLE 6

Dans cet exemple selon l'invention, le dispositif comprend des membranes échangeuses d'ions cationiques Nafion® 450 (DuPont de Nemours). 292 g d'une solution d'hydrazine aqueuse à 64,15 % en poids sont traités pendant 2 h. On obtient 37,7 g d'un pervaporat contenant 69,74 % en poids d'hydrazine (donc une concentration supérieure à celle de l'azéotrope). La concentration du rétentat en hydrazine est de 63,23%. Le débit de pervaporat est de 1,49 kg/h.m².

La sélectivité ([N₂H₄] pervaporat/ [N₂H₄] rétentat) est de 1,095.

### EXEMPLE 7 (comparatif)

Cet exemple a été réalisé dans les mêmes conditions que l'exemple 6, sauf que la membrane utilisée était une membrane CMT Asahi Glass avec un copolymère différent, à savoir, un copolymère styrène-divinylbenzène greffé avec des fonctions sulfoniques.
Le débit de pervaporat était de 0,29 kg/h.m².
La sélectivité ([N₂H_{4]} pervaporat/ [N₂H_{4]} rétentat) était de 0,966.

## Revendications

1. Procédé de concentration d'une solution d'hydrazine aqueuse de départ en une solution concentrée, comprenant une étape de pervaporation sur une membrane cationique à base d'un polymère perfluoré contenant des groupes acide sulfonique latéraux (-SO₃H) ou en mélange avec du polytétrafluoréthylène (PTFE).

2. Procédé selon la revendication 1, **caractérisé en ce que** la membrane cationique est un copolymère de tétrafluoroéthylène et d'un monomère représenté par la stucture suivante :
CF₂=C(F)[-O-CF₂-C(CF₃) (F)]ₙ-O-CF₂-CF₂-SO₂F

3. Procédé selon la revendication 1 ou la revendication 2, dans lequel la solution concentrée est récupérée côté perméat.

4. Procédé selon l'une des revendications 1 à 3, dans lequel la différence de concentration entre les solutions d'hydrazine aqueuse de départ et concentrée est d'au moins 2 %, avantageusement au moins 4 %.

5. Procédé selon l'une quelconque des revendications 1 à 4, dans lequel la solution concentrée a une concentration en hydrazine supérieure à celle de l'azéotrope considéré sous la pression à laquelle se trouve ladite solution concentrée.

6. Procédé selon l'une quelconque des revendications 1 à 5, dans lequel la solution d'hydrazine aqueuse de départ est binaire.

7. Procédé de production d'hydrazine anhydre, comprenant une première étape de concentration d'une solution d'hydraxine aqueuse de départ en une solution concentrée selon l'une quelconque des revendications 1 à 6, et la distillation de cette solution concentrée la pression de distillation étant choisie de telle sorte que la concentration de ladite solution concentrée est supérieure à la valeur de celle de l'azéotrope considéré à la pression de distillation.

8. Procédé de production d'hydrazine anhydre, selon la revendication 7, dans lequel la solution concentrée a une concentration en hydrazine supérieure à celle de l'azéotrope considéré sous la pression à laquelle se trouve ladite solution concentrée.

9. Procédé de production d'hydrazine anhydre, selon la revendication 7 ou la revendication 8, dans lequel la pression de distillation est de 1 bar.

10. Utilisation d' un dispositif de pervaporation (1) comprenant une membrane cationique à base d'un polymère perfluoré contenant des groupes acide sulfonique latéraux (-SO₃H) ou en mélange avec du polytétrafluoréthylène (PTFE), pour la mise en oeuvre du procédé selon l'une quelconque des revendications 1 à 6.

11. Utilisation selon la revendication 10, **caractérisé en ce que** la membrane cationique est un copolymère de tétrafluoroéthylène et d'un monomère représenté par la stucture suivante :
CF₂=C(F)[-O-CF₂-C(CF₃)(F)]ₙ-O-CF₂-CF₂-SO₂F

12. Utilisation d'un dispositif de pervaporation (1) comprenant une membrane cationique à base d'un polymère perfluoré contenant des groupes acide sulfonique latéraux (-SO₃H) ou en mélange avec du polytétrafluoréthylène (PTFE), ce dispositif (1) étant relié à une colonne de distillation (6), pour la mise en oeuvre du procédé selon l'une des revendications 7 à 9.

13. Utilisation selon la revendication 12, dans laquelle la conduite (8) de soutirage en pied de la colonne est recyclée vers l'alimentation (2) du dispositif de pervaporation (1).

## Claims

1. Process for concentrating an initial aqueous hydrazine solution to a concentrated solution, comprising a stage of pervaporation on a cationic membrane based on a perfluorinated polymer containing side sulphonic acid groups (-SO₃H) or in a mixture with polytetrafluoroethylene (PTFE).

2. Process according to claim 1, **characterized in that** the cationic membrane is a copolymer of tetrafluoroethylene and a monomer represented by the following structure:
CF₂=C(F)[-O-CF₂-C(CF₃)(F)]ₙ-O-CF]₂-CF₂-SO₂F

3. Process according to claim 1 or claim 2, in which the concentrated solution is recovered on the permeate side.

4. Process according to one of claims 1 to 3, in which the difference in concentration between the initial and concentrated aqueous hydrazine solutions is at least 2%, advantageously at least 4%.

5. Process according to any one of claims 1 to 4, in which the concentrated solution has a hydrazine concentration greater than that of the azeotrope considered under the pressure at which said concentrated solution is found.

6. Process according to any one of claims 1 to 5, in which the initial aqueous hydrazine solution is binary.

7. Process for the production of anhydrous hydrazine, comprising a first stage of concentration of an initial aqueous hydrazine solution to a concentrated solution according to any one of claims 1 to 6, and the distillation of this concentrated solution, the distillation pressure being chosen such that the concentration of said concentrated solution is greater than the value of that of the azeotrope considered at the distillation pressure.

8. Process for the production of anhydrous hydrazine according to claim 7, in which the concentrated solution has a hydrazine concentration greater than that of the azeotrope considered under the pressure at which said concentrated solution is found.

9. Process for the production of anhydrous hydrazine according to claim 7 or claim 8, in which the distillation pressure is 1 bar.

10. Use of a pervaporation device (1) comprising a cationic membrane based on a perfluorinated polymer containing side sulphonic acid groups (-SO₃H) or in a mixture with polytetrafluoroethylene (PTFB) for implementing the process according to any one of claims 1 to 6.

11. Use according to claim 10, **characterized in that** the cationic membrane is a copolymer of tetrafluoroethylene and a monomer represented by the following structure:
CF₂=C(F)[-O-CF₂-C(CF₃)(F)]ₙ-O-CF₂-CF₂-SO₂F

12. Use of a pervaporation device (1) comprising a cationic membrane based on a perfluorinated polymer containing side sulphonic acid groups (-SO₃H) or in a mixture with polytetrafluoroethylene (PTFE), this device (1) being connected to a distillation column (6) for implementing the process according to one of claims 7 to 9.

13. Use according to claim 12, in which the draw off pipe (8) at the foot of the column is recycled towards the feed (2) of the pervaporation device (1).

## Patentansprüche

1. Verfahren zur Konzentrierung einer wässrigen Hydrazin-Ausgangslösung zu einer konzentrierten Lösung, umfassend eine Stufe einer Pervaporation an einer kationischen Membran auf der Basis eines perfluorierten Polymers, das seitliche Sulfonsäuregruppen (-SO₃H) enthält, oder eines Gemisches davon mit Polytetrafluorethylen (PTFE).

2. Verfahren nach Anspruch 1, **dadurch gekennzeichnet, dass** die kationische Membran ein Copolymer aus Tetrafluorethylen und einem Monomer, das durch die folgende Struktur dargestellt wird:
CF₂=C(F)[-O-CF₂-C(CF₃)(F)]ₙ-O-CF₂-CF₂-SO₂F
ist.

3. Verfahren nach Anspruch 1 oder Anspruch 2, in dem die konzentrierte Lösung permeatseitig gewonnen wird.

4. Verfahren nach einem der Ansprüche 1 bis 3, in dem die Konzentrationsdifferenz zwischen der wässrigen Hydrazin-Ausgangslösung und der konzentrierten Lösung wenigstens 2%, vorteilhafterweise wenigstens 4% ist.

5. Verfahren nach einem der Ansprüche 1 bis 4, in dem die konzentrierte Lösung eine Konzentration an Hydrazin hat, die über der des Azeotrops, betrachtet unter dem Druck, bei dem sich die konzentrierte Lösung befindet, liegt.

6. Verfahren nach einem der Ansprüche 1 bis 5, in dem die wässrige Hydrazin-Ausgangslösung binär ist.

7. Verfahren zur Herstellung von wasserfreiem Hydrazin, umfassend eine erste Stufe der Konzentrierung einer wässrigen Hydrazin-Ausgangslösung zu einer konzentrierten Lösung nach einem der Ansprüche 1 bis 6 und Destillation dieser konzentrierten Lösung, wobei der Destillationsdruck so gewählt wird, das die Konzentration der konzentrierten Lösung über dem Wert des Azeotrops, betrachtet bei dem Destillationsdruck, liegt.

8. Verfahren zur Herstellung von wasserfreiem Hydrazin nach Anspruch 7, in dem die konzentrierte Lösung eine Konzentration an Hydrazin über derjenigen des Azeotrops, betrachtet unter dem Druck, unter dem sich die konzentrierte Lösung befindet, hat.

9. Verfahren zur Herstellung von wasserfreiem Hydrazin nach Anspruch 7 oder Anspruch 8, in dem der Destillationsdruck 1 bar ist.

10. Verwendung einer Pervaporationsvorrichtung (1), umfassend eine kationische Membran auf der Basis eines perfluorierten Polymers, das seitliche Sulfonsäuregruppen (-SO₃H enthält, oder eines Gemisches davon mit Polytetrafluorethylen (PTFE) zur Durchführung des Verfahrens nach einem der Ansprüche 1 bis 6.

11. Verwendung nach Anspruch 10, **dadurch gekennzeichnet, dass** die kationische Membran ein Copolymer aus Tetrafluorethylen und einem Monomer, das durch die folgende Struktur dargestellt wird:
CF₂=C(F)[-O-CF₂-C(CF₃)(F)]ₙ-O-CF₂-CF₂-SO₂F
ist.

12. Verwendung einer Pervaporationsvorrichtung (1), umfassend eine kationische Membran auf der Basis eines perfluorierten Polymers, das seitliche Sulfonsäuregruppen (-SO₃H) enthält, oder eines Gemisches davon mit Polytetrafluorethylen (PTFE), wobei diese Vorrichtung (1) auf einer Destillationskolonne (6) basiert, zur Durchführung des Verfahrens nach einem der Ansprüche 7 bis 9.

13. Verwendung nach Anspruch 12, wobei die Entnahmeleitung (8) am Boden der Kolonne zur Beschickung (2) der Pervaporationsvorrichtung (1) zurückgeführt wird.
